# EUROPÄISCHE PATENTSCHRIFT

(11) **EP 0 734 333 B1**
(45) Veröffentlichungstag und Bekanntmachung des Hinweises auf die Patenterteilung: **19.12.2001**
(21) Anmeldenummer: 95929742.5
(22) Anmeldetag: 02.09.1995
(51) Int. Cl.: B60R 25/04

(54) **WEGFAHRSPERRE MIT KURZER ENTRIEGELUNGSZEIT**
IMMOBILIZATION DEVICE WITH A SHORT UNLOCKING TIME
DISPOSITIF D'IMMOBILISATION A COURTE DUREE DE DEBLOCAGE

(30) Priorität: 27.09.1994 DE 4434450
(43) Veröffentlichungstag der Anmeldung: 02.10.1996
(73) Patentinhaber: ROBERT BOSCH GMBH, 70442 Stuttgart (DE)
(72) Erfinder: LOCHER, Johannes, D-70378 Stuttgart (DE); FISCHER, Werner, D-71296 Heimsheim (DE); LAICHINGER, Martin, D-73061 Ebersbach (DE)
(86) Internationale Anmeldenummer: DE9501190
(87) Internationale Veröffentlichungsnummer: WO9609943

(56) Entgegenhaltungen:
- EP-A- 0 637 529
- GB-A- 2 264 536
- GB-A- 2 289 357
- US-A- 4 107 962
- Patent Abstracts of Japan, Band 14, Nr 121(M-946); & JP,A,01317852 (MOTOHIRO GOTANDA), 1989-12-22

## Beschreibung

### Stand der Technik

Die Erfindung geht aus von einer Einrichtung nach der Gattung des Hauptanspruchs. Um der steigenden Anzahl von Fahrzeugdiebstählen entgegenzuwirken, werden Kraftfahrzeuge zunehmend mit Wegfahrsperren ausgerüstet. Sie umfassen in der Regel eine Berechtigungsprüfeinrichtung (Immobilizer) sowie mehrere damit verbundenen Steuergeräte zur Steuerung fahrzeugwichtiger Funktionen, wie etwa der Freigabe der Dieselzufuhr oder der Steuerung des Einspritzvorgangs. Arbeitsprinzip aller gängigen Wegfahrsperren ist der Codevergleich. Eine Freigabe der fahrzeugwichtigen Funktionen erfolgen nur, wenn ein durch einen Benutzer zuzuführender Code mit einem in der Wegfahrsperre vorab gespeicherten übereinstimmt. Durch eine nachgeschaltete, in der Regel ebenfalls auf einem Codevergleich beruhende Entriegelungskommunikation zwischen der Berechtigungsprüfeinrichtung und den angeschlossenen Steuergeräten wird weiterhin die Zusammengehörigkeit der Systemkomponenten überprüft. Die Codezuführung durch den Benutzer kann beispielsweise durch eine Magnetkarte, berührungsfrei durch einen Sender oder mittels einer Tastatur erfolgen. Eine derartige Einrichtung ist beispielsweise aus der DE-A 42 42 492 bekannt. Wegfahrsperren dieser Art gewährleisten eine durchaus zufriedenstellende Diebstahlsicherheit. Verbunden mit der Sicherheitsverbesserung ist allerdings eine kleine Verzögerungszeit beim Starten des Fahrzeugs, bedingt durch die zunächst erfolgende Berechtigungsprüfung. Für die meisten Inbetriebnahmen ist diese Verzögerungszeit unerheblich. Dennoch sind Betriebssituationen möglich, in denen sie störend wirkt. Beispiele hierfür sind etwa ein im Verkehrsfluß "abgewürgtes" Fahrzeug, oder eine kurze Spannungsunterbrechung aufgrund einer Störung auf der Versorgungsleitung. Schon aus Sicherheitsgründen soll es möglichst schnell wieder gestartet werden können. Macht jedoch der Neustart zum Beispiel eine manuelle Codezuführung erforderlich, etwa über eine Tastatur, durch Betätigen eines Sendeknopfes, aber auch durch Initialisieren, Übertragen und Auswerten eines berührungsfrei eingegbenenen Codes, kann eine solche Situation kritisch werden.

Zur Überwindung dieses Nachteils wurde bereits vorgeschlagen, ein Fahrzeug zunächst für eine vorbestimmte Zeit freizugeben (US-PS 4 107 962), innerhalb derer der Benutzer die Entriegelung durch Eingabe einer Taste oder Zuführen eines Codes bestätigen kann. Derartig gesicherte Fahrzeuge sind jedoch gegen Diebstahl nicht geschützt, wenn der Fahrzeugdieb Kenntnis von der Art der Sicherung hat. Durch wiederholte kurzzeitige Spannungsunterbrechungen, bzw. rechtzeitiges Neustarten kann er das Fahrzeug vergleichsweise mühelos entwenden.

Der Erfindung liegt deshalb die Aufgabe zugrunde, eine Wegfahrsperre derart weiterzubilden, daß sie eine schnelle Fahrzeuginbetriebnahme gestattet, ohne daß damit ein Verlust in der Diebstahlsicherheitswirkung verbunden ist.
Diese Aufgabe wird gelöst durch eine Anordnung mit den Merkmalen des Hauptanspruchs. Grundlage der erfindungsgemäßen Anordnung ist, eine Inbetriebnahme des Fahrzeuges zunächst für eine bestimmte Anzahl von Versuchen jeweils bedingungslos für die Dauer einer Vorfreigabezeit freizugeben, diese Anzahl aber nach jedem nicht ordnungsgemäßen Inbetriebnahmeversuch zu verringern.

Vorteilhaft geschieht dies, indem die Vorfreigabezeit bei jedem nicht erfolgreichen Startversuch reduziert wird, bis sie nach einer vorgebbaren Zahl von Versuchen den Wert Null erreicht. Dadurch ist für einen rechtmäßigen Nutzer jederzeit ein praktisch verzögerungsfreier Neustart des Fahrzeugs möglich. Dagegen kann ein Fahrzeugdieb, selbst wenn er Kenntnis von der Arbeitsweise der Wegfahrsperre hat, das erfindungsgemäß gesicherte Fahrzeug nicht durch wiederholtes Neustarten des Fahrzeugs entwenden.
Alternativ zur Reduzierung der Vorfreigabezeit kann vorgesehen sein, die Zahl der nachfolgend noch möglichen Inbetriebnahmen mit bedingungsloser vorläufiger Freigabe mittel eines Indexes zu bestimmen, der bei jedem nicht ordungsgemäßen Inbetriebnahmeversuch verkleinert wird.

Besonders vorteilhaft ist es, die Vorfreigabezeit bei jedem Start ausgehend von einem Maximalwert zunächst zu vermindern. Erfolgt die Entriegelung in gültiger Weise, wird die Vorfreigabezeit für den nächsten Neustart wieder auf den Maximalwert gesetzt. Zweckmäßig ist die jeweils aktuelle Vorfreigabezeit in einem nichtflüchtigen Speicher wie etwa einem EEPROM abgelegt. Vorteilhaft ist es weiterhin, eine Zwangswartezeit vorzusehen, innerhalb derer das Fahrzeug nicht entriegelbar ist, wenn innerhalb der Vorfreigabezeit eine gültige Entriegelung nicht erreicht wurde. Des weiteren ist es sinnvoll, die Vorfreigabezeit stets dann auf den Maximalwert zu setzen, wenn bei der Berechtigungsprüfung ein Fehler innerhalb der Berechtigungsprüfeinrichtung bzw. Wegfahrsperre auftritt. Zweckmäßig erhält ein Benutzer innerhalb der Vorfreigabezeit mehrfach die Möglichkeit, einen gültigen Code zuzuführen.

Ein Ausführungsbeispiel der Erfindung wird nachfolgend unter Bezugnahme auf die Zeichnung näher erläutert.

### Zeichnung

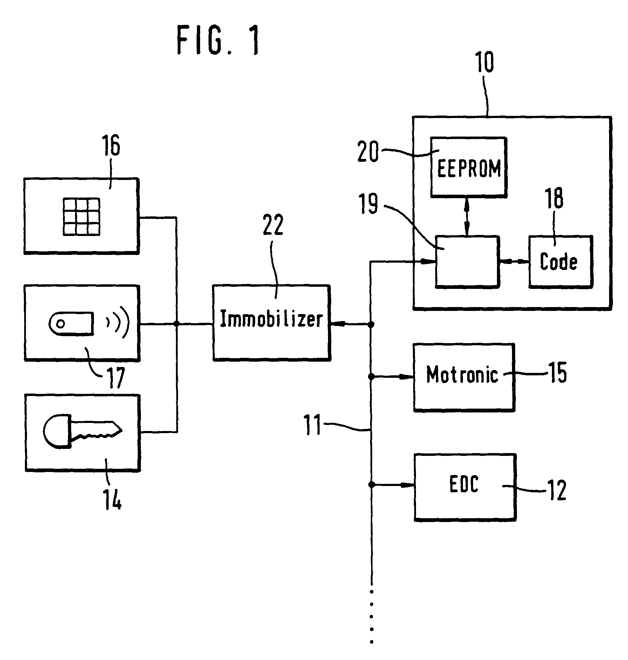

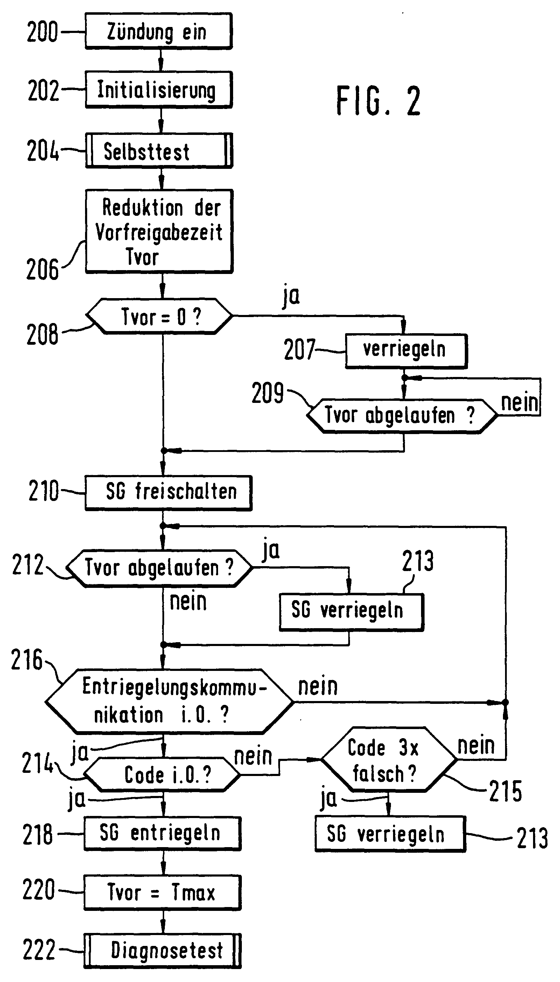

Es zeigen Figur 1 ein Blockschaltbild einer Wegfahrsperre, Figur 2 die Arbeitsweise der Wegfahrsperre in Form eines Flußdiagramms.

### Beschreibung

Figur 1 zeigt eine typische Struktur einer Wegfahrsperre für Kraftfahrzeuge. Bezugszahl 10 bezeichnet ein betriebsrelevantes Steuergerät, zum Beispiel das Magnetventilsteuergerät zur Ansteuerung des Dieselabsperrventils. Es baut sich intern aus einer Berechtigungsprüfeinrichtung 18, einer Vorfreigabeeinrichtung 19 sowie einem nichtflüchtigen Speicher 20 auf. Kern des Steuergerätes 10 ist ein Mikroprozessor oder eine ähnliche, digitale logische Signale verarbeitende Einrichtung, die in Verbindung mit entsprechenden Programmen auch zur Realisierung der Einrichtungen 18, 19 dienen kann. Mit dem Steuergerät 10 über eine Signalleitung 11 verbunden sind ein Diebstahlschutzsteuergerät 22, im folgenden Immobilizer genannt, sowie ein oder mehrere weitere Steuergeräte 12, 15 zur Steuerung fahrzeugwesentlicher Funktionen. Bei Dieselfahrzeugen mit elektronisch geregelten Dieseleinspritzpumpen zählt hierzu beispielsweise das Pumpensteuergerät (EDC Steuergerät), bei Benzinfahrzeugen die Einspritzsteuerung 15. Andere nicht dargestellte Steuergeräte dieser Art sind etwa ein Getriebesteuergerät, ein Antiblockiersystem, oder ein Antischlupfregler. Über die Leitung 11 führt der Immobilizer 22 mit den Steuergeräten 10, 12, 15 einen Datenaustausch. Eine dauerhafte Freigabe der Steuergeräte 10, 12, 15 für das Fahren erfolgt nur nach Empfang eines gültigen Codes. Dem Immobilizer 22 ist dabei eingangsseitig über eine Eingabeeinrichtung, beispielsweise einen Schlüssel 14, welcher zum Beispiel induktiv auf eine im Zündschloß angeordnete Spule arbeitet, einen Infrarotempfänger 17, oder eine Tastatur 16 ein Schloßcode zugeführt. Der Schloßcode wird im Immobilizer 22 aufbereitet und entschlüsselt. Über die Signalleitung 11 wird er sodann an ein oder mehrere betriebsrelevante Steuergeräte 10, 12, 15 übertragen.

Anhand der Figur 2 wird nachfolgend die Arbeitsweise der in Figur 1 dargestellten Wegfahrsperre erläutert. Die Fahrzeuginbetriebnahme wird in bekannter Weise, insbesondere durch Drehen eines Zündschlüssels in eine Startposition eingeleitet, Schritt 200. Sobald dadurch das elektrische System des Fahrzeugs mit Bordspannung versorgt ist, erfolgt, Schritt 202, eine Initialisierung des Immobilizers 10 sowie der Steuergeräte 12, 15. Alle Steuergeräte 10, 12, 15 werden dabei in vorgegebene Startkonfigurationen versetzt. Üblicherweise schließt sich an die Initialisierung, wie mit Schritt 204 dargestellt, ein Selbsttest der Steuergeräte 10, 12, 15 an.

Nach Herstellung der Betriebsbereitschaft der Wegfahrsperre in den Schritten 202 und 204 wird in Schritt 206 die Vorfreigabezeit Tᵥₒᵣ reduziert. Ihren Wert entnimmt die Vorfreigabeeinrichtung 19 einem hierzu im Steuergerät 10 vorhandenen nichtflüchtigen Speicher 20, zum Beispiel einem EEPROM, welcher bei Wegfall der Fahrzeugbordspannung seinen Inhalt nicht verliert. Die Vorfreigabezeit Tᵥₒᵣ definiert eine Zeit, für welche der Fahrzeugbetrieb anschließend bedingungslos freigegeben ist. Ihr maximaler Wert liegt zweckmäßig im Bereich von 1 bis 10 Sekunden. Der Reduktionsschritt 206 erfolgt beispielsweise derart, daß die Vorfreigabezeit Tᵥₒᵣ jeweils, ausgehend von einem Maximalwert Tₘₐₓ um ein Viertel des maximalen Wertes reduziert wird.

Im folgenden Schritt 208 überprüft die Vorfreigabeeinrichtung 19, ob die nach der Verringerung im Schritt 206 erhaltene Vorfreigabezeit Tᵥₒᵣ den Wert Null hat. Ist das Ergebnis dieser Prüfung negativ, das heißt, hat die Vorfreigabezeit Tᵥₒᵣ einen von Null verschiedenen Wert, werden die zu entriegelnden Steuergeräte 12, 15 im Schritt 210 vorläufig freigegeben.

Ist das Ergebnis der Prüfung im Schritt 208 positiv, das heißt, hat die gültige Vorfreigabezeit Tᵥₒᵣ den Wert Null, verriegelt sich die Wegfahrsperre für eine vorgegebene Zeit Tᵥₑᵣ. Ihr Wert liegt zweckmäßig in einem Bereich von 20 Sekunden bis 5 Minuten. Vorteilhaft verlängert sie sich bei jeder Inbetriebnahme, wenn die jeweils vorhergehende Inbetriebnahme ebenfalls erst nach Ablauf einer Zwangswartezeit Tᵥₑᵣ erfolgt ist. Hierfür legt die Vorfreigabeeinrichtung 19 zweckmäßig eine entsprechende Information in einen nichtflüchtigen Speicher, in einfacher Weise ebenfalls in den Speicher 20, ab. Im folgenden Schritt 209 wird geprüft, ob die Zwangswartezeit Tᵥₑᵣ abgelaufen ist. Solange dies nicht der Fall ist, bleibt der Entriegelungsvorgang unterbrochen. Ergibt die Prüfung im Schritt 209, daß eine Zwangswartezeit Tᵥₑᵣ abgelaufen ist, schließt sich wie nach Schritt 208 der Schritt 210 an.

Nach der vorläufigen Freigabe erfolgt eine Prüfung, ob die Vorfreigabezeit Tᵥₒᵣ abgelaufen ist, Schritt 212. Ist dies der Fall, verriegelt sich die Wegfahrsperre, Schritt 213. Der Startversuch war in diesem Fall ungültig, weil beispielsweise ein geforderter Code nicht innerhalb der Vorfreigabezeit eingelesen wurde. Im Speicher 20 befindet sich in diesem Fall die zum Zeitpunkt der Verriegelung gültige Vorfreigabezeit Tᵥₒᵣ, , d.h die nach Verkleinerung in Schritt 206 vorliegende Vorfreigabezeit. Ein Neustart erfolgt deshalb mit verkürzter Vorfreigabezeit Tᵥₒᵣ. Betrug diese beispielsweise zuletzt drei Viertel des maximalen Wertes, Tₘₐₓ, steht für den nächsten Startversuch, bei Verringerung in Schritt 206 um jeweils ein Viertel, nur noch eine Vorfreigabezeit Tᵥₒᵣ mit dem halben maximalen Wert Tₘₐₓ zur Verfügung. Die nach Schritt 213 verriegelte Wegfahrsperre wartet im weiteren auf die Zuführung eines Codes zur Entriegelung.

Ist das Ergebnis der Prüfung im Schritt 212 negativ, das heißt ist die Vorfreigabezeit Tᵥₒᵣ noch nicht abgelaufen, wird eine Entriegelungskommunikation mit dem Immobilizer 22 eingeleitet. Dabei wartet die Vorfreigabeeinrichtung 19 auf einen Code vom Immobilizer 22 oder fordert einen solchen aktiv an. Erfolgt der Aufbau der Entriegelungskommunikation nicht in vorgeschriebener Weise, wird Schritt 212 wiederholt. Bei erfolgreichem Aufbau der Entriegelungskommunikation schließt sich in Schritt 214 eine Berechtigungsprüfung an, wobei ein vom Immobilizer abgegebener Code mit einem in der Berechtigungsprüfungseinrichtung 18 vorhandenen Referenzcode verglichen wird. Voraussetzung für die Absetzung des Codes durch den Immobilizer 22 ist dabei, daß dem Immobilizer 22 seinerseits durch einen Fahrzeugbenutzer ein vorbestimmter Schloßcode zugeführt wurde. Stimmt der vom Immobilizer 22 zugeführte Code nicht mit dem abgespeicherten Referenzcode überein, erfolgt eine Prüfung, Schritt 215, ob der Immobilizer 22 bereits wiederholt mehrfach, zum Beispiel drei Mal einen falschen Code abgegeben hat. Ist dies der Fall, verriegelt sich die Wegfahrsperre wiederum gemäß Schritt 213. Ergibt die Prüfung im Schritt 215, daß weniger als die vorgegebene Zahl von Versuchen ein falscher Code eingegeben wurde, werden die Schritte 212 fortfolgend wiederholt.

Liefert die Prüfung im Schritt 214 eine Übereinstimmung zwischen vom Immobilizer 22 zugeführtem und vorab gespeichertem Code, folgt in Schritt 218 die endgültige Freigabe der Steuergeräte 10, 12, 15 an. Dabei wird die Vorfreigabezeit Tᵥₒᵣ, die im Schritt 206 zunächst verkürzt wurde, wieder auf den maximalen Wert Tₘₐₓ zurückgesetzt, Schritt 220. Die entriegelte Wegfahrsperre 10, 12, 15 führt anschließend zweckmäßig Steuergerätefunktionen und Diagnosetests durch, wie in Schritt 222 angedeutet.

Eine vorteilhafte Ausgestaltung der Speichermittel 20 zum Speichern der Vorfreigabezeit Tᵥₒᵣ sieht vor, diese so auszubilden, daß im Falle eines Fehlers innerhalb der Speichermittel 20 jeweils diejenige nächstgrößere Vorfreigabezeit Tᵥₒᵣ eingestellt wird, bei der kein Fehler auftritt. Bei völligem Ausfall der Funktionen zum Verkürzen der Vorfreigabezeit Tᵥₒᵣ gemäß Schritt 206, beziehungsweise zum Rücksetzen der Vorfreigabezeit Tᵥₒᵣ gemäß Schritt 220 wird die Vorfreigabezeit Tᵥₒᵣ auf den maximalen Wert Tₘₐₓ gesetzt.

Bei einer alternativen Ausführung der erfindungsgemäßen Wegfahrsperre erfolgt die zahlenmäßige Beschränkung möglicher aufeinanderfolgender Inbetriebnahmen mit vorläufiger, bedingungsloser Freigabe mit Hilfe eines die Zahl nachfolgend noch möglicher weiterer Inbetriebnahmen bezeichnenden Indexes N. Die Vorfreigabezeit T kann einen gleichbleibenden Wert haben. Anstelle der Verkleinerung der noch vorhandenen Vorfreigabezeit T tritt bei dieser Ausführung in Schritt 206 eine Verminderung des Indexes N, vorzugsweise um den Wert eins. Entsprechend schließt sich in Schritt 208 die Prüfung an, ob der Index N den Wert null hat. Ist dies der Fall, folgt Schritt 207, hat N einen von Null verschiedenen Wert, folgt Schritt 210. Nach gültiger Entriegelung, Schritt 218, wird in Schritt 220 der Index N auf seinen Maximalwert N zurückgesetzt, an Stelle der Vorfreigabezeit T. Erfolgt im Anschluß an die Schritte 212 oder 216 eine Verriegelung, befindet sich anstatt der aktuellen Vorfreigabezeit T der jeweils aktuelle, d.h. der nach Schritt 206 vorliegende Wert des Indexes N im Speicher 20. Die übrigen Schritte des in Figur 2 wiedergegebenen Flußdiagrammes werden unverändert beibehalten.

Unter Beibehaltung des der Erfindung zugrundeliegenden Gedankens ist eine Vielzahl von Ausgestaltungen der vorgeschlagenen Anordnung möglich. Beispielsweise kann die Funktion des Immobilizers 22 direkt in die Steuergeräte 10, 12, 15 integriert sein. Ebenso können andere Eingabemittel zur Codezuführung oder eine andere Realisierung des Inbetriebnahmebeginns vorgesehen sein. Hinsichtlich der Arbeitsweise der vorgeschlagenen Anordnung sind nur typische oder unerläßliche Schritte dargestellt. Je nach konkreter Realisierung der Wegfahrsperre kann es insbesondere eine Vielzahl weiterer Zwischenschritte geben. Einige Schritte, wie etwa der Selbsttest gemäß Schritt 204 oder die Abfrage auf dreimalige Eingabe eines falschen Codes gemäß Schritt 215 können auch entfallen und/oder an anderer Stelle erfolgen.

## Patentansprüche

1. Wegfahrsperre für Fahrzeuge mit einem eine fahrzeugwichtige Funktion steuernden Steuergerät (10, 12, 15), das nur nach Durchführung einer Berechtigungsprüfung freigeschaltet ist, sowie mit einer Vorfreigabeeinrichtung (19), die das Steuergerät (10, 12, 15) bei Inbetriebnahme bedingungslos für eine Vorfreigabezeit (Tᵥₒᵣ) freigibt, **dadurch gekennzeichnet, daß** die Vorfreigabeeinrichtung (19) die Anzahl möglicher aufeinanderfolgender Inbetriebnahmen mit bedingungsloser Freigabe des Steuergerätes (12,15) auf einen jeweils vorbestimmten Wert begrenzt, welcher gegenüber dem zuletzt eingestellten verkleinert ist, wenn eine nicht ordnungsgemäße Inbetriebnahme vorherging.

2. Wegfahrsperre nach Anspruch 1, **dadurch gekennzeichnet, daß** die Vorfreigabeeinrichtung (19) die Dauer der Vorfreigabezeit (Tᵥₒᵣ) gegenüber der zuletzt eingestellten verkürzt, wenn eine nicht ordnungsgemäße Inbetriebnahme vorherging.

3. Wegfahrsperre nach Anspruch 1, **dadurch gekennzeichnet, daß** die Vorfreigabezeit (Tᵥₒᵣ) bei gültiger Inbetriebnahme auf einen maximalen Wert (Tₘₐₓ) zurückgesetzt wird.

4. Wegfahrsperre nach Anspruch 1, **dadurch gekennzeichnet, daß** sie sich für eine Zwangswartezeit (Tᵥₑᵣ) verriegelt, wenn die Vorfreigabezeit (Tᵥₒᵣ) bei Inbetriebnahme den Wert Null hat.

5. Wegfahrsperre nach Anspruch 1, **dadurch gekennzeichnet, daß** sie nichtflüchtige Speichermittel (20) aufweist, in denen eine Information (Tᵥₒᵣ) über die jeweils noch mögliche Anzahl weiterer Inbetriebnahmeversuche mit bedingungsloser Freigabe des Steuergerätes (12,15) abgelegt ist.

6. Wegfahrsperre nach Anspruch 5, **dadurch gekennzeichnet, daß** die Anzahl-Information (Tᵥₒᵣ) im Falle eines Fehlers innerhalb der Speichermittel (20) auf den maximalen Wert (Tₘₐₓ) gesetzt wird.

## Claims

1. Immobilizer for vehicles having a control unit (10, 12, 15) which controls a function which is important for the vehicle and which is enabled only after an authorization test has been carried out, and having a pre-enabling device (19) which enables the control unit (10, 12, 15) unconditionally for a pre-enabling time (Tᵥₒᵣ) when starting-up occurs,
**characterized in that** the pre-enabling device (19) limits the number of possible successive starting-up operations with unconditional enabling of the control unit (12, 15) to a respective predetermined value which is reduced with respect to the last value set if a preceding starting-up operation was not satisfactory.

2. Immobilizer according to Claim 1, **characterized in that** the pre-enabling device (19) shortens the length of the pre-enabling time (Tᵥₒᵣ) in comparison with the last one set if a preceding starting-up operation was not satisfactory.

3. Immobilizer according to Claim 1, **characterized in that** the pre-enabling time (Tᵥₒᵣ) is reset to a maximum value (Tₘₐₓ) when a valid starting-up operation occurs.

4. Immobilizer according to Claim 1, **characterized in that** it is disabled for a compulsory waiting time (Tᵥₑᵣ) if the pre-enabling time (Tᵥₒᵣ) has the value zero when starting-up occurs.

5. Immobilizer according to Claim 1, **characterized in that** it has non-volatile storage means (20) in which information (Tᵥₒᵣ) relating to the respective still possible number of further attempts at starting-up is stored with unconditional enabling of the control unit (12, 15).

6. Immobilizer according to Claim 5, **characterized in that** in the case of an error within the storage means (20) the numerical information (Tᵥₒᵣ) is set to the maximum value (Tₘₐₓ).

## Revendications

1. Dispositif d'immobilisation de véhicules automobiles, comprenant un appareil de commande (10, 12, 15) régissant une fonction importante du véhicule et qui n'est débloqué qu'après exécution d'un contrôle d'autorisation, ainsi qu'un dispositif de prédéblocage (19) qui débloque sans condition l'appareil de commande (10, 12, 15) à la mise en marche pour un délai de prédéblocage (Tᵥₒᵣ),
**caractérisé en ce que**
le dispositif de prédéblocage (19) limite le nombre des mises en marche successives possibles avec déblocage sans condition de l'appareil de commande (12, 15), à une valeur prédéterminée chaque fois et qui est réduite par rapport à la dernière qui a été réglée, quand il y a eu une mise en marche non conforme.

2. Dispositif d'immobilisation selon la revendication 1,
**caractérisé en ce que**
le dispositif de prédéblocage (19) réduit la durée du délai de prédéblocage (Tᵥₒᵣ) par rapport à sa dernière valeur de réglage, si une mise en marche non conforme a eu lieu.

3. Dispositif d'immobilisation selon la revendication 1,
**caractérisé en ce que**
le délai de prédéblocage (Tᵥₒᵣ) en cas de mise en marche valable est ramené à une valeur maximale (Tₘₐₓ).

4. Dispositif d'immobilisation selon la revendication 1,
**caractérisé en ce qu'**
il se verrouille pour un délai d'attente obligatoire (Tᵥₑᵣ) si le délai de prédéblocage (Tᵥₒᵣ) a la valeur zéro à la mise en marche.

5. Dispositif d'immobilisation selon la revendication 1,
**caractérisé en ce qu'**
il comporte des moyens de mémorisation (20) non volatiles, dans lesquels est déposée une information (Tᵥₒᵣ) concernant chaque fois le nombre encore possible d'essais de mise en marche avec déblocage sans condition de l'appareil de commande (12, 15).

6. Dispositif d'immobilisation selon la revendication 5,
**caractérisé en ce que**
l'information de nombre (Tᵥₒᵣ), dans le cas d'un défaut à l'intérieur des moyens de mémorisation (20) est réglée sur sa valeur maximale (Tₘₐₓ).
